# EUROPEAN PATENT APPLICATION

(11) **EP 1 788 267 A1**
(43) Date of publication of application: **23.05.2007**
(21) Application number: 06252380.8
(22) Date of filing: 04.05.2006
(51) Int. Cl.: F16D 3/205

(54) **Tripod type constant velocity universal joint**

(30) Priority: 30.08.2005 JP 2005250165
(71) Applicant: NTN CORPORATION, Osaka-shi, Osaka 550-0003 (JP)
(72) Inventor: Sugiyama, Tatsuro, NTN Corporation, Iwata-shi Shizuoka-ken (JP)
(74) Representative: White, Duncan Rohan

(57) **Abstract**

The present invention provides a tripod type constant velocity universal joint of lower induction thrust and slide resistance. A tripod type constant velocity universal joint comprises an outer joint member (10) having three track grooves (12) with roller-guiding surfaces (14) opposing each other circumferentially, a tripod member (20) with three trunnions (22) protruding in a radial direction, a plurality of rollers (34) each inserted into the corresponding track groove (12) and a plurality of rings (32) each fitted on the corresponding trunnion (22) for supporting the roller (34) rotatably. Each roller (34) is movable in an axial direction of the outer joint member (10) along the roller-guiding surface (14). An inner surface (32a) of the ring (32) is formed as a convex arc R. An outer surface (22a) of said trunnion (22) having a straight shape in a longitudinal section and an ellipse shape in a cross-section to render the outer surface (32a) thereof contiguous to an inner surface (32a) of the ring (32) in a direction perpendicular to a joint axial direction and to form a play between a ring inner surface (32a) and an outer surface (22a) of trunnion (22) in a joint axial direction so as to reduce radius of curvature r, where r is radius axial length of trunnion cross-section ellipse, whilst keeping the aspect ratio b/a, where a is the major axial length of trunnion cross-section ellipse and b is the minor axial length of trunnion cross-section ellipse, of trunnion cross-section ellipse stable in comparison with a contact ellipse shape being defined to minimize contact pressure between a ring inner surface and a trunnion outer surface, where.

## Description

### BACKGROUND OF THE INVENTION

### Field of the Invention

The present invention relates to a tripod type constant velocity universal joint for use in a drive train of automobiles and other industrial machineries, especially relates to the tripod type constant velocity universal joints that expand low vibration characteristics range of induction thrust to wider operating angles between two rotary shafts connected.

### Description of the Background Art

A constant velocity universal joint is one of the universal joints that enables constant velocity linkage even if driving shaft axis and driven shaft axis make an operation angle. The constant velocity universal joints are classified into fixed joint and sliding joint. Sliding joint enables relative axial displacement by plunging behaviour of a joint. Furthermore sliding joint includes a tripod joint which comprises a tripod member connected to an end of one shaft having three protruded trunnions in radial direction, and a hollow shaped outer joint member connected to an end of another shaft having three track grooves that extend to axial direction and trunnions of tripod members inserted to track grooves of outer joint member to perform torque transmission.

The inventor of this invention has proposed some tripod type constant velocity joints (hereinafter called as PTJ) to improve NVH (noise, vibration and harshness, hereinafter called as NVH) characteristics by free tilting movement of a roller to a trunnion, for example Japanese Laid Open Patent Publication No. 2000-320563 (patent document 1) and 2001-132766.

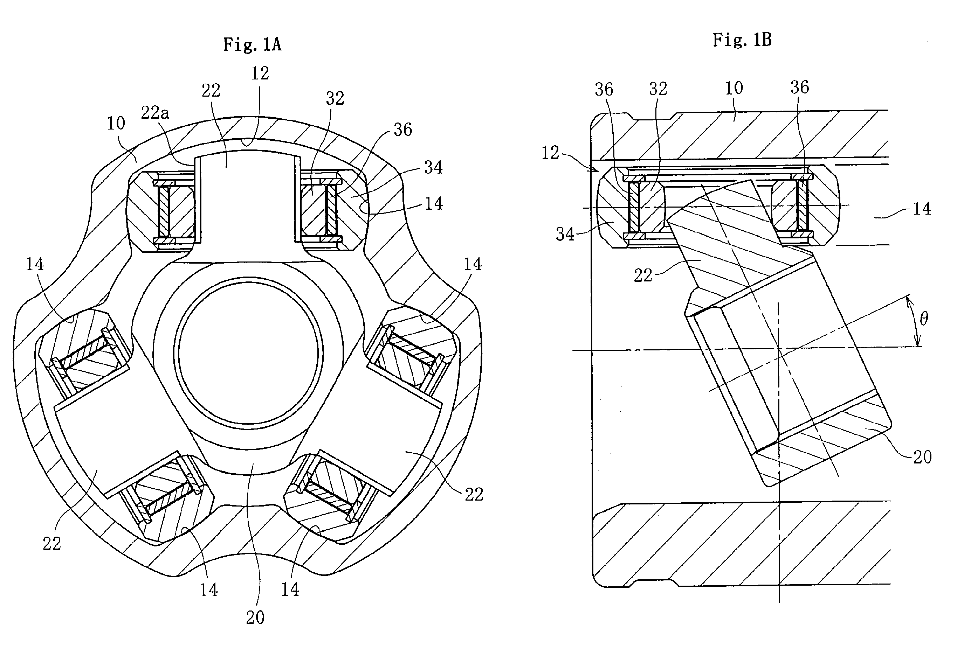

This PTJ comprises, as shown in Fig 1 (A) and (B), an outer joint member 10 and a tripod member 20, one of two connecting shafts are connected with an outer joint member 10 and another is connected to a tripod member 20. An outer joint member 10 has three track grooves, which extend in an axial direction on inner surface of the joint body. A pair of roller-guiding surfaces 14 are formed in the opposite sidewalls of the track groove which are opposite to each other in a circumference direction. A tripod member 20 has three trunnions 22 which protrude in a radial direction, each trunnion has rollers 34, and a roller 34 is inserted into a track groove 12 of an outer joint member 10. An outer surface of a roller 34 is a convex curved surface mating with a roller-guiding surface 14. An outer surface of roller 34 is a convex curved surface having a generating line which is an arc having a center of curvature being in alignment with or eccentric from an axis of the trunnion. The cross section of a roller-guiding surface 14 is a gothic arc. Thus the roller 34 and roller-guiding surface 14 make angular contact.

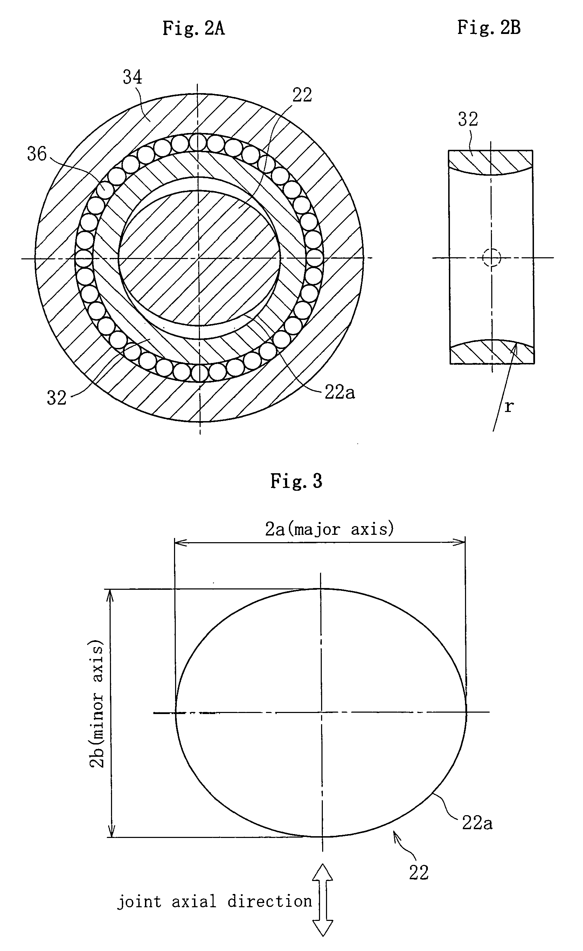

A ring 32 is fitted to an outer surface 22a of a trunnion 22 as shown in Fig. 2. The ring 32 and a roller 34 are unitized by plural needle rollers 36, and completed as a roller assembly that achieves relative rotation between the ring 32 and roller 34. Longitudinal section of outer surface 22a of trunnions 22 looks cylindrical parallel to a trunnion 22 longitudinal axis as shown in Fig. 1 (A) and (B). Also, a cross-section of a trunnion 22 as shown in Fig 2 (A) and Fig 3 is formed as an ellipse with the major axis perpendicular to the joint axis, i.e. the thickness of a tripod member 20 in axial direction is decreased to form an ellipse. In other words opposing arced portions of the cross-section of trunnion are recessed in an axial direction of the joint compared to true cylindrical surface to form an ellipse.

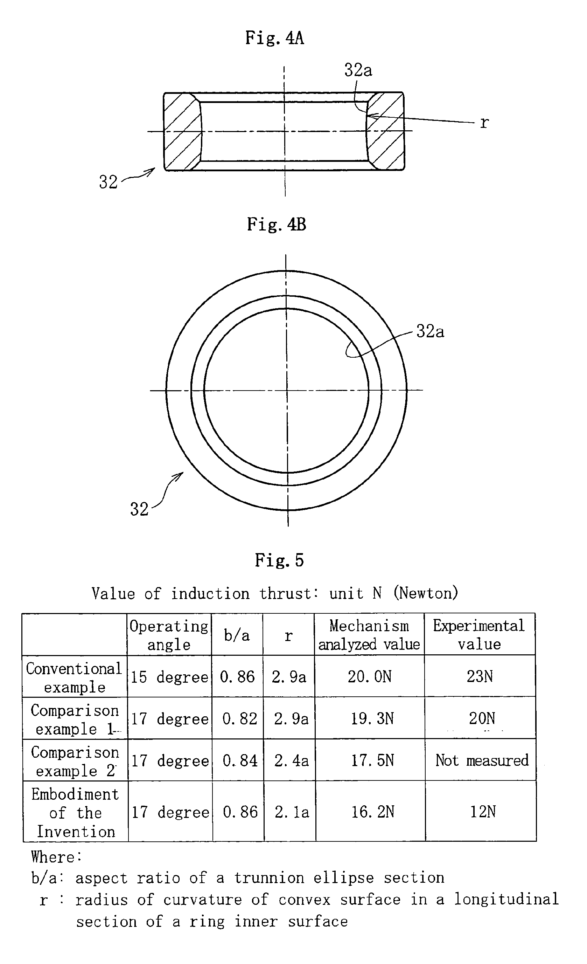

An inner surface 32a of ring 32 is formed convex arc R in longitudinal direction as shown in Fig 4 (A) and (B). thus a generating line of inner surface 32a is convex arc of radius r. With the convex arc, an ellipse cross-section of a trunnion 22 as explained above and provided play between a trunnion 22, and a ring 32, a ring 32 is not only movable to the axial direction of trunnion 22 but also pivotable on a trunnion 22.

A ring 32 and a roller 34 are assembled with needle rollers 36 to allow relative rotation as described earlier, an assembly consists of a ring 32 and rollers 34 are allowed pivoting on a trunnion 22. Hereinafter pivoting is defined behavior that axis of ring 32 and roller 34 is inclined toward trunnion 22 within the plane contains trunnion 22 axis and tripod member 20 axis. Refer to Fig 1 (B).

By the above mentioned cross-section of a trunnion 22 and cross-section of a ring 32, a trunnion 22 can tilt to an outer joint member 10 without changing a position of the roller assembly when the joint takes an operating angle θ. Friction moment which tends to incline a roller assembly can be reduced. Because area of contact ellipse made by a trunnion outer surface 22a and a ring inner surface 32a becomes smaller to lead the area to a small dot or circle. Therefore orientation of a roller assembly becomes stable so that a roller rotates smoothly because of a parallel alignment of a roller and a roller guide surface. This construction can contribute to achieve lower slide resistance and induction thrust.

As described above a contact plane of a trunnion outer surface of PJT and a ring inner surface becomes a contact ellipse. Area and shape of this contact ellipse is deeply related to joint induction thrust and slide resistance. Therefore an optimum contact ellipse area and shape have been studied, but still satisfactory results are not obtained yet.

A shape of contact ellipse is determined by an aspect ratio of minor axial length b to major axial length a of an ellipse section of a trunnion 22 and a radius of curvature r of convex R in a longitudinal section of a ring inner surface. Presently each optimum figure of the aspect ratio b/a and a radius of curvature r are given to minimize the contact pressure. With the aspect ratio b/a and the radius of curvature r for minimizing contact pressure, it is possible to keep induction thrust and slide resistance low up to certain operating angle. Because a trunnion 22 and a roller assembly can be inclined relatively without inclination of a roller assembly to a roller-guiding surface of outer joint member up to certain operating angle. However, it becomes clear that when the operating angle becomes greater than such certain operating angle vibration characteristics get worse because said contact ellipse interferes with roller assembly movement. Therefore simply increasing a maximum angle of inclination between a trunnion 22 and a roller assembly may deteriorate vibration characteristics, leading to durability finally-to get worse due to contact pressure increase.

NVH problems of automobile are solved effectively by making induction thrust and sliding resistance smaller. Generally induction thrust and sliding resistance of joints are depending on the degree of operating angle.

This becomes design restriction for effecting larger operating angle when applied to drive shaft of automobiles.

The mission to have higher design freedom of automobile drive shaft system equipments are how low and stable induction thrust and slide resistance are obtained.

### SUMMARY OF THE INVENTION

An object of this invention is to achieve further lower induction thrust and lower vibration by optimizing the shape of contact ellipse between a trunnion and a ring of PTJ.

In order to solve this problem, the first aspect of the invention is to achieve such an object by reducing the radius of curvature r whilst the keeping the aspect ratio b/a stable.

The first aspect of the invention comprises; an outer joint member having three track grooves each of which has roller-guiding surfaces opposing each other in a circumference direction; a tripod member with three trunnions protruding in radial direction; a plurality of rollers each inserted into the corresponding track groove; a plurality of rings each fitted to the corresponding trunnion for enabling free rotation of the roller; each said roller is movable along with a roller-guiding surface in an axial direction of an outer joint member; an inner surface of the ring is formed as convex arc R in a longitudinal section; an outer surface of trunnion takes on a straight shape in a longitudinal section and an ellipse shape in cross-section to render the outer surface thereof contiguous to an inner surface of the ring in a direction perpendicular to a joint axial direction and to form a play between a ring inner surface and an outer surface of trunnion in a joint axial direction; wherein radius of curvature r is reduced whilst the aspect ratio b/a is kept stable.

To minimize the contact pressure between the ring inner surface and trunnion outer surface of PTJ, it is convinced presently that a contact ellipse should be close to a circle as far as possible as described in the patent document 1, paragraph [0011] and [0025]. Conventional recommended value of aspect ratio b/a and radius of curvature r is determined from such a viewpoint.

The inventor of the present invention comes to this invention without sticking to the idea that is conventionally convinced to minimize contact pressure in which a contact ellipse shape is slightly elongated in a circumferential direction relatively to a axial direction of the trunnion so that an operating angle of the joint can be widened with keeping induction thrust and vibration level lower.

The second aspect of the invention according to the first aspect of the invention is characterized in that the radius of curvature r is within the range of 1.9a to 2.5a, and aspect ratio b/a within the range of 0.8 to 0.9. Aspect ratio b/a is stable as that of conventional PTJ. The present invention renders the radius of curvature r short with keeping the aspect ratio stable.

As stated above, the invention can provide a low vibration characteristics to a PTJ of wide operating angle with induction thrust to be under certain value effected by the contact ellipse shape which is elongated in the circumferential direction of the trunnion by solely decreasing radius of curvature r of the ring.

### BREIF DESCRIPTION OF THE DRAWINGS

Fig. 1A is a cross-sectional view of a tripod type constant velocity universal joint in accordance with an embodiment of the invention.
Fig. 1B is a longitudinal sectional view of a tripod type constant velocity universal joint when inclined to operating angel θ.
Fig. 2A is a cross-sectional view of trunnion with roller assembly.
Fig. 2B is a longitudinal section view of a ring.
Fig. 3 is an enlarged cross-sectional view showing aspect ratio of trunnion.
Fig. 4A is a cross section view of a ring.
Fig. 4B is a plane view of a ring.
Fig. 5 is a table showing analysis results of induction thrust mechanism.
Fig. 6 is a graph showing analysis results of induction thrust mechanism.

### BRIEF DESCRIPTION OF THE PREFERRED EMBODIMENTS

Hereinafter preferred embodiment of this invention is given with referring to the drawings. Structure of a tripod type constant velocity universal joint of this invention is as shown in Fig 1 through Fig 4. Aforementioned explanations of Fig 1 through Fig 4 are the same to this invention and to be applicable to this invention. Novel feature of this invention lies in the combination of aspect ratio b/a of trunnion cross-section shown in Fig 3 and radius of curvature r of convex arc R in a longitudinal section of ring inner surface as shown in Fig 4.

PTJ transmits torques by contacting an ellipse shaped trunnion 22 and a ring 32 with inner surface as convex surface R, so the relaxation consideration of contact pressure of both parts is required. As to the relaxation of contact pressure, the patent document 1 defines contact ellipse shape with r=2.9a and b/a=0.86 in case of operating angle of 15 degree (Refer to Table 1 of patent document 1). When operating angle is enlarged from 15 degree to 17 degree, according to theory of the patent document 1 both reverse aspect ratio b/a and radius of curvature r are required to be reduced. This is therefore Table 1 in the patent document 1 defines r=1.994a and b/a=0.806 in case of operating angle of 20 degree. On the contrary this invention achieves lower induction thrust by only decreasing of radius of curvature r. Because decreasing radius of curvature r makes less area decrease of contact ellipse, the increase of contact pressure at enlarged operating angle compared with the case both radius of curvature r and reverse aspect ratio b/a are reduced.

From the stimulation results obtained by mechanism analysis software, the case both radius of curvature r and reverse aspect ratio b/a are made smaller, and the case only reverse aspect ratio b/a is reduced can not make lower the induction thrust at higher operating angle range, however the case radius of curvature r is smaller can contribute to lower induction thrust at higher operating angle range.

Fig 5 shows the summary of these analyses results. In this Fig 5 conventional example to the case that the table 1 in the patent document 1 defines. Comparison example 1 shows the results of reverse aspect ratio is smaller, and comparison example 2 shows the results of radius of curvature r are smaller. The results of mechanism analyses show both cases do not provide sufficient low results of induction thrust values. On the contrary, the embodiment of this invention, which makes smaller the radius of curvature r, provides sufficient low induction thrust in high operating angle range. In this embodiment reverse aspect ratio is set as 0.86 as conventional example and reduction in radius of curvature r from 2.9a to 2.1a.

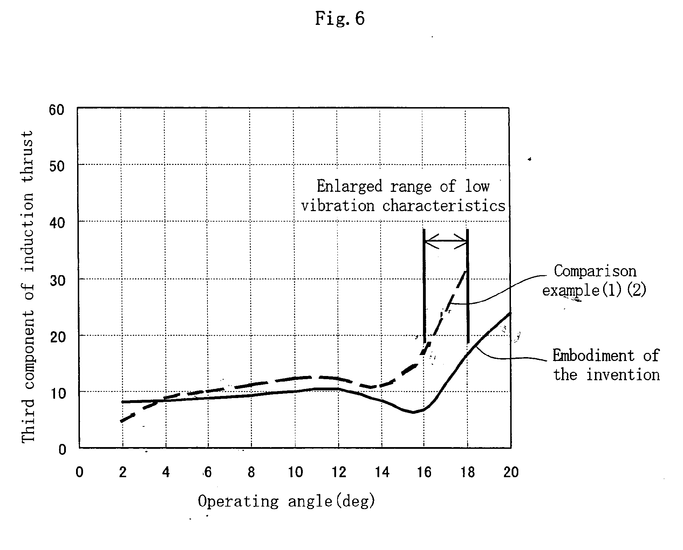

Fig 6 shows the stimulation results in a chart. In this chart a dotted line shows comparison examples 1 and 2. A solid line shows the embodiment of the invention. Assuming that the allowable upper limit of induction thrust component is 20N, this embodiment realizes the high operating angle that is no less than 2 degree wider than the comparison examples.

The constant velocity universal joint of this invention can be applied advantageously to the automobile drive shafts to provide better NVH characteristics of automobiles influenced by the induction thrust and slide resistance together with increased design freedom of automobile drive shaft system design.

## Claims

1. A tripod type constant velocity universal joint comprising:
an outer joint member (10) having three track grooves (12) each of which has roller-guiding surfaces (14) opposing each other in a circumference direction;
a tripod member (20) with three trunnions (22) protruding in a radial direction;
a plurality of rollers (34) each of which is inserted into a corresponding one of said track grooves (12);
a plurality of rings (32) each of which is fitted on said corresponding trunnion (22) for rotatably supporting said roller (34);
said roller (34) being movable in an axial direction of the outer joint member (10) along a roller-guiding surface (14);
an inner surface (32a) of said ring (32) is formed as a convex arc R in longitudinal section;
an outer surface (22a) of said trunnion (22) being formed to take on a straight shape to a longitudinal section and an ellipse shape in a cross section to render the outer surface (22a) thereof contiguous with an inner surface (32a) of the ring (32) in a direction perpendicular to a joint axial direction and to form a play between said inner surface (32a) and an outer surface (22a) of trunnion (22) in a joint axial direction;
wherein a contact ellipse shape between said trunnion (22) and said ring (32) being modified so as to reduce a radius of curvature r, where r is the radius of curvature of convex arc R in a longitudinal section of a ring inner surface, whilst keeping the aspect ratio of a trunnion cross section ellipse b/a, where a is the major axial length of trunnion cross-section ellipse and b is the minor axial length of trunnion cross-section ellipse, stable in comparison with a contact ellipse shape being defined to minimize contact pressure between a ring inner surface (32a) and trunnion outer surface (22a).

2. The tripod type constant velocity universal joint according to claim 1, wherein radius of curvature r being 1.9x a to 2.5 x a and aspect ratio b/a is 0.8 to 0.9.
